# EUROPÄISCHE PATENTANMELDUNG

(11) **EP 3 211 910 A1**
(43) Veröffentlichungstag der Anmeldung: **30.08.2017**
(21) Anmeldenummer: 17401007.4
(22) Anmeldetag: 01.02.2017
(51) Int. Cl.: H04N 21/482, H04N 21/478, H04N 21/436, H04N 5/445, H04N 21/45, H04N 21/462, H04N 21/472

(54) **ANORDNUNG MIT EINER EMPFANGSEINRICHTUNG, EINE EMPFANGSEINRICHTUNG SOWIE VERWENDUNG EINER EMPFANGSEINRICHTUNG**

(30) Priorität: 26.02.2016 DE 102016103416
(71) Anmelder: TechniSat Digital GmbH, 54550 Daun (DE); TechniSat Dresden GmbH, 01139 Dresden (DE)
(72) Erfinder: Enderlein, Stephan, 01156 Dresden (DE); Volkmann, Lutz, 01326 Dresden (DE)

(57) **Zusammenfassung**

Die Erfindung betrifft eine Anordnung mit einer Empfangseinrichtung, die Empfangseinrichtung selbst sowie die Verwendung dieser Empfangseinrichtung. Die Empfangseinrichtung ist eingerichtet zum Empfangen von linearen Medieninhalten. Die Anordnung weist eine Empfangseinrichtung (1) zum Empfangen von linearen Medieninhalten (3) sowie eine Peripherie (4) zum Übertragen und Speichern von Daten (5) auf, wobei die Empfangseinrichtung (1) mit der Peripherie (4) gekoppelt ist, wobei in der Peripherie (4) ein Speicherort (6) bereitgestellt ist zum Speichern von Daten (5), wobei in dem Speicherort (6) Daten (5) eines persönlichen Kalenders (7) gespeichert sind und die Daten (5) Einträge in dem persönlichen Kalender (7) sind, wobei die Empfangseinrichtung (1) eingerichtet ist, mindestens einen Eintrag (8) in dem persönlichen Kalender (7) vorzunehmen, nämlich anzulegen, zu löschen und/oder zu ändern.

Der gewonnene Vorteil ist, dass eine bislang in einer oder mit einer eigenen Datenumgebung arbeitende Empfangseinrichtung ihre möglicherweise für den Tagesablauf eines Bediener relevanten Daten mit dessen sonstigen Mitteln der modernen Datenkommunikation (wie z.B. Laptop, PDA Smartphone) teilen kann

## Beschreibung

Die Erfindung betrifft eine Anordnung mit einer Empfangseinrichtung, die Empfangseinrichtung selbst sowie die Verwendung dieser Empfangseinrichtung. Die Empfangseinrichtung ist eingerichtet zum Empfangen von linearen Medieninhalten. Die Lösung eignet sich zur Verwendung auf dem Gebiet der Fernsehtechnik.

Bei der Empfangseinrichtung kann es sich beispielsweise um ein TV- Gerät oder um ein an einen Flachbildschirm angeschlossenes externes Gerät handeln, das für den Rundfunk und zur Ausgabe/Wiedergabe von Bild (inklusive Ton) insofern ausgebildet ist, dass ein dafür vorgesehenes Signal (zum Beispiel HDMI) von dem Gerät bereitgestellt werden kann. Eine Empfangseinrichtung kann aber auch ein Computerprogramm mit und für einen TV-Empfänger (z.B. TV-Karte, TV-USB-Stick) sein. Ein solcher TV-Empfänger ist für den Rundfunkempfang eingerichtet.

Ferner ist die Empfangseinrichtung zur Verwendung eines (Computer-)Netzwerkes eingerichtet.

Elektronische Kalender sind bekannt und sind sowohl im beruflichen als auch im privaten Umfeld etabliert. Moderne Bürokommunikationssysteme weisen elektronische Kalender auf. Mittels der elektronischen Kalender wird heutzutage der Alltag vieler Menschen organisiert. Es ist üblich, elektronische Kalender auch für private Zwecke einzusetzen. Es ist ferner üblich, dass Gruppen von Personen mittels elektronischer Kalender ihre gemeinsamen Aktivitäten organisieren. Aufgrund der Verfügbarkeit und Verbreitung des Internets wurden solche elektronischen Kalender geschaffen, deren Daten im Internet gespeichert sind.

Es ist technisch mittels des Internets möglich, dass von verschiedenen Geräten und von verschiedenen Orten gemeinsam genutzte (engl. "shared") Kalender gepflegt (bearbeitet) und eingesehen (gelesen) werden können.

Eine Empfangseinrichtung wie ein TV-Gerät beinhaltet derzeit eine umfangreiche Menge von Daten, wie beispielsweise die Daten einer elektronischen Programmzeitschrift (EPG engl. "electronic program guide"), die in der Empfangseinrichtung zeitlich aufbereitet und dargestellt werden, ähnlich wie in einem Kalender.

Bislang ist kein technisches Mittel bekannt, derartige Daten von der Empfangseinrichtung in einen elektronischen Kalender zu übertragen. Mit anderen Worten ist es bislang nicht vorgesehen, dass beispielsweise ein Bediener eines TV-Gerätes mittels einer Menüfunktion einen Eintrag aus der elektronischen Programmzeitschrift ohne weiteres in den elektronischen Kalender übertragen kann, der beispielsweise auf seinem Computer oder auf seinem tragbaren mobilen Gerät eingerichtet ist. Es bietet sich an, dass der Bediener auf den genannten Geräten einen Eintrag in seinem persönlichen elektronischen Kalender vorfindet, der darauf hinweist, dass sich der Bediener eine TV-Sendung vorgemerkt hat. Sofern nachfolgend von einem persönlichen Kalender oder nur von einem Kalender die Rede ist, ist grundsätzlich ein elektronischer Kalender gemeint.

Es kann folglich als ein Lösungsbedürfnis angesehen werden, Informationen oder Daten, die Zeiten oder Zeitintervalle betreffen und die auf einem TV-Gerät hinterlegt sind, über geeignete Speicher- und Übertragungsmechanismen übrigen Geräten zur Verfügung zu stellen. Die übrigen Geräte sind solche, die eine Person im täglichen Gebrauch verwendet, um u.a. den Tagesablauf zeitlich zu organisieren.

Es wird eine Anordnung gemäß Anspruch 1, eine Empfangseinrichtung gemäß Anspruch 9 sowie eine Verwendung einer Empfangseinrichtung gemäß Anspruch 10 vorgeschlagen.

Gemäß einer ersten Ausgestaltung ist eine Anordnung vorgesehen, die aufweist, eine Empfangseinrichtung zum Empfangen von linearen Medieninhalten sowie eine Peripherie zum Übertragen und Speichern von Daten. Die Empfangseinrichtung ist mit der Peripherie gekoppelt. In der Peripherie ist ein Speicherort bereitgestellt zum Speichern von Daten. In dem Speicherort sind Daten eines persönlichen Kalenders gespeichert. Die Daten sind Einträge in dem persönlichen Kalender. Die Empfangseinrichtung ist eingerichtet, Einträge in dem persönlichen Kalender vorzunehmen, d.h. die Einträge anzulegen, zu löschen und/oder zu ändern.

Gemäß einer Ausführungsform der Anordnung ist vorgesehen, dass die Empfangseinrichtung solche Daten aufweist, die an eine Zeit, nämlich Datum und/oder Uhrzeit, gebunden sind. Ferner ist die Empfangseinrichtung eingerichtet, Einträge eines Kalenders der Empfangseinrichtung bereitzustellen.

Gemäß einer Ausführungsform der Anordnung ist vorgesehen, dass die Einträge des Kalenders der Empfangseinrichtung, Inhalte einer elektronischen Programmzeitschrift und/oder von einem Bediener der Empfangseinrichtung erfasste zeitliche Ereignisse sind.

Gemäß einer Ausführungsform der Anordnung ist vorgesehen, dass der Eintrag in dem Kalender der Empfangseinrichtung eine erste Zeit für den zeitlichen Anfang und optional eine zweite Zeit für das zeitliche Ende des Eintrages aufweist. Ferner weist der Eintrag eine Information zu dem Inhalt des Eintrages sowie eine erste Markierung auf, die zum Erfassen dafür bereitgestellt ist, dass der Eintrag in dem persönlichen Kalender vorzunehmen ist.

Gemäß einer Ausführungsform der Anordnung ist vorgesehen, dass der Eintrag in dem Kalender der Empfangseinrichtung ferner eine zweite Markierung aufweist, die zum Vormerken dafür bereitgestellt ist, dass der Eintrag für den Bediener von besonderem Interesse ist.

Gemäß einer Ausführungsform der Anordnung ist vorgesehen, dass die Anordnung mindestens ein elektronisches Gerätes aufwiest, dass das elektronische Gerät mit der Peripherie gekoppelt ist und dass das elektronische Gerät eingerichtet ist, den persönlichen Kalender zu verarbeiten, d.h. Einträge vorzunehmen und/oder zu lesen. Das Vornehmen eines Eintrages in dem persönlichen Kalenders ist derart eingerichtet, dass die Daten in dem Speicherort angelegt, gelöscht oder geändert werden.

Gemäß einer Ausführungsform der Anordnung ist vorgesehen, dass das Vornehmen eines Eintrages in dem persönlichen Kalenders derart eingerichtet ist, dass in der Empfangseinrichtung die Daten des Eintrages des Kalenders der Empfangseinrichtung geändert werden, zu dem ein adäquater Eintrag in dem persönlichen Kalender vorhanden ist.

Gemäß einer Ausführungsform der Anordnung ist vorgesehen, dass das elektronische Gerät den Speicherort in der Peripherie bereitstellt.

Gemäß einer weiteren Ausgestaltung ist eine Empfangseinrichtung vorgesehen, die in mindestens einer Ausführungsform für die gezeigte Anordnung ausgebildet ist.

Gemäß einer weiteren Ausgestaltung ist eine Verwendung einer aufgezeigten Empfangseinrichtung vorgesehen.

Nachfolgend wird die Erfindung anhand von Ausführungsbeispielen und zugehörigen Zeichnungen erläutert. Hierzu zeigen:
Fig. 1 Anordnung - mehre elektronische Geräte
Fig. 2 Anordnung - Datenaustausch zwischen Empfangseinrichtung und Gerät

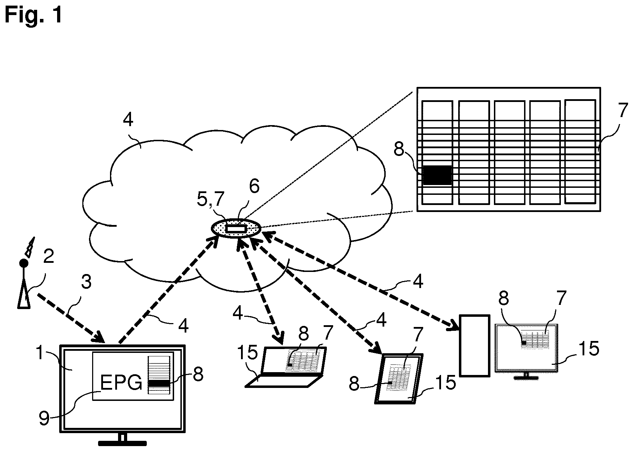

In der Fig. 1 ist eine Anordnung gezeigt. Die Anordnung weist eine Empfangsvorrichtung 1 zum Empfangen von linearen Medieninhalten 3 auf. Es ist ein Sender 2 gezeigt, der die lineare Medieninhalte 3 über den terrestrischen Übertragungsweg versendet. Die linearen Medieninhalte 3 können über verschiedene Übertragungswege zu der Empfangseinrichtung 1 gelangen. Derartige Übertragungswege können beispielsweise die terrestrische Funkübertragung, die Satellitenübertragung sowie die Übertragung über Kabel sein.

Die Anordnung weist ferner eine Peripherie 4 auf. Die Peripherie 4 weist die Topologie eines Netzwerkes auf sowie mehrere eindeutig adressierbare Speicherorte 6. Ein Beispiel für eine solche Peripherie 4 ist das Internet. Mit anderen Worten kann die Empfangseinrichtung 1 mit dem Internet (WAN) oder mit einem lokalen Netz (LAN) verbunden sein. In der Anordnung sind mehrere elektronische Geräte 15 gezeigt, die gleichermaßen mit der Peripherie 4 verbunden sind. In dem Speicherort 6 der Peripherie 4 sind Daten 5 gespeichert. Die Daten 5 sind für Einträge 8 eines persönlichen Kalenders 7 vorgesehen. Der persönliche Kalender 7 ist (rechts oben) gesondert dargestellt. Ferner ist mittels der Strich-Linien veranschaulicht, dass mittels der Peripherie 4 die elektronischen Geräte 15 auf den zentral in dem Speicherort 6 gespeicherten persönlichen Kalender 7 zugreifen können. Die als Beispiele gezeigten elektronischen Gerät 15 sind ein tragbarer Computer (Laptop), ein mobiles Gerät (Smartphone) sowie ein Computer. Alle drei genannten Geräte sind ausgebildet, den Kalender 7 zumindest lesen und gegebenenfalls bearbeiten zu können.

Die Empfangseinrichtung 1 empfängt zusammen mit den linearen Mediendaten 3 solche Daten, die beispielsweise zeitliche Ereignisse zu den Programmen und Sendungen beinhalten. Dabei kann es sich beispielsweise um die Daten einer elektronischen Programmzeitschrift 9 (EPG) handeln. In diesen sogenannten EPG-Daten sind Informationen zu den ausgestrahlten Sendungen enthalten. Für eine Reihe von Programmen (z.B. ARD, ZDF, MDR) enthalten die EPG- Daten die Sendezeiten für mehrere Sendungen für mehrere Tage. Hinter den Sendezeiten (mit Anfang/Ende) ist vermerkt, welchen Namen oder welche Bezeichnung die den Zeiten zugeordnete Sendung hat.

Mithin lassen sich diese zeitlichen Ereignisse als Einträge eines Kalenders der Empfangseinrichtung 1 behandeln/verarbeiten. Es ist in dem Beispiel gezeigt, dass ein solcher Eintrag 8 an der Empfangseinrichtung 1 vorhanden ist. Der in dem Speicherort 6 abgelegte/gespeicherte Kalender 7 weist ebenfalls einen solchen Eintrag 8 auf. Ferner wird dieser Eintrag 8 auch in den "Kalendern" 7 auf den (drei) elektronischen Geräten 15 angezeigt.

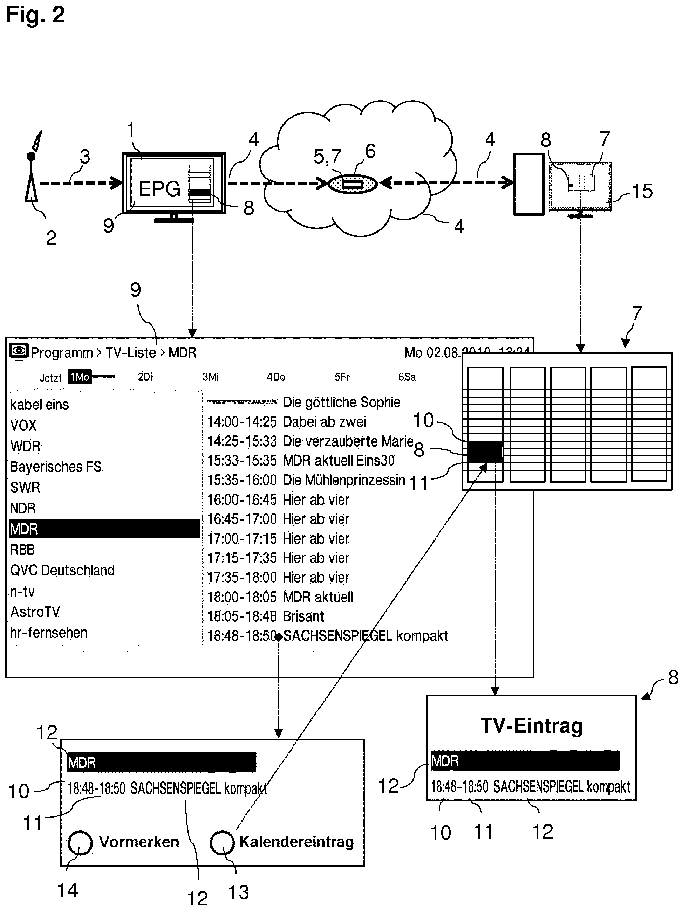

In der Fig. 2 ist wie bereits in Fig. 1 der Sender 2, die Übertragung der linearen Medieninhalte 3 zu der Empfangseinrichtung 1 gezeigt sowie die Verbindung zu der Peripherie 4 und dem Speicherort 6, in dem der persönliche Kalender 7 gespeichert ist. Ferner ist einer Verbindung mittels der Peripherie 4 bereitgestellt, die zwischen dem Speicherort 6 und dem elektronischen Gerät 15 (Computer) hergestellt/aufgebaut ist.

Zu der Empfangseinrichtung 9 ist ein Ausschritt aus einer elektronischen Programmzeitschrift 9 mit EPG-Daten 9 gezeigt. Diese EPG-Daten 9 sind zunächst in Programme geteilt (linke Seite) und ferner in Sendungen (rechte Seite); für das jeweils gewählte Programm. Es ist gezeigt, dass als einen Eintrag des Kalenders der Empfangseinrichtung 1 eine Sendung gewählt ist, die 18:48 Uhr beginnt, 18:50 Uhr endet und die auf dem Programm MDR empfangbar ist. Diese Sendung trägt die Bezeichnungen "Sachsenspiegel kompakt".

Die Darstellung unten links zeigt eine mögliche Form der Anzeige eines solchen Eintrages 9 auf der Anzeigefläche (Bildschirm) der Empfangsvorrichtung 1. Neben den Dateninhalten wie Anfang 10, Ende 11 und sonstigen Informationen 12 kommen hier zwei Markierungen oder Ausführungselemente zur Ansicht. Die Markierungen/Ausführungselemente sind dergestalt, dass ein Bediener mittels einer Markierung eine sofortige oder spätere Ausführung auslösen kann, sodass gemäß der Markierung der Eintrag verarbeitet wird (eine Funktion oder Dergleichen ausgeführt wird). An einem TV-Gerät werden zu diesem Zweck üblicherweise die sog. Farb-Tasten (rot, grün, gelb, blau) der Fernbedienung verwendet, d.h. mit einer Ausführung verknüpft.

Eine zweite Markierung 14 (links) ist mit der Bezeichnung "Vormerken" versehen. Die Funktionen die sich dahinter verbirgt ist vorgesehen, dass ein Bediener die Sendung kennzeichnet, weil sie für ihn von einem besonderen Interesse ist. D.h., der Bediener merkt sich eine Sendung vor, damit er diese in der Zukunft nicht verpasst oder vergisst.

Eine erste Markierung 13 ist mit der Bezeichnung "Kalendereintrag" versehen. Diese erste Markierung 13 ist eingerichtet, dass der Eintrag 8, optional mit der zweiten Markierung 14 ("Vormerken") versehen, in den persönlichen Kalender 7 am Speicherort 6 eingetragen wird. In Folge, dass der Eintrag 8 in dem persönlichen Kalender 7 vorgenommen ist, besteht für das elektronische Gerät 15 die Möglichkeit diesen Eintrag 8 auch in dem persönlichen Kalender 7 zu übernehmen, der auf dem elektronischen Gerät 15 angezeigt werden kann oder wird.

Es kann zweckmäßig sein, dass im Fall der zweiten Markierung 14 ("Vormerken"), die erste Markierung 13 automatisch gesetzt und/oder ausgeführt wird. Die zweite Markierung 14 ("Vormerken") kann auch dafür vorgesehen sein, dass der Bediener die vorgemerkten Einträge in der elektronischen Programmzeitschrift 9 seiner Empfangseinrichtung 1 angezeigt bekommt.

Es ist grundsätzlich vorgesehen, dass eine erste Markierung 13 und eine zweite Markierung 14 wieder zurückgenommen werden kann. Das kann auch dazu führen, dass ein Ändern eines Eintrages 8 ein Löschen in dem persönlichen Kalender 7 zu Folge hat. Nach dem gezeigten Bespiel könnte anstatt "Kalendereintrag" entweder "Kalendereintrag vornehmen" oder "Kalendereintrag löschen" stehen, sofern ein äquivalenter Eintrag 8 in dem persönlichen Kalender 7 fehlt beziehungsweise vorhanden ist. Mit anderen Worten fällt unter das Vornehmen eines Eintrages anlegen, löschen und ändern.

Der gewonnene Vorteil ist, dass eine bislang in einer oder mit einer eigenen Datenumgebung arbeitende Empfangseinrichtung 1 ihre möglicherweise für den Tagesablauf eines Bediener relevanten Daten mit dessen sonstigen Mitteln der modernen Datenkommunikation (wie z.B. Laptop, PDA Smartphone) teilen kann. D.h., die Daten zumindest an diese Mittel übergeben und/oder diesen Mitteln bereitstellen kann (z.B. mittels Speicherort).

Auf der rechten Seite ist ein Auszug eines persönlichen Kalenders 7 gezeigt, wie er möglicherweise auf dem elektronischen Gerät 15 dargestellt sein könnte. Der persönliche Kalender weist nunmehr den Eintrag 8 auf, wie er ursprünglich mittels der ersten Markierung 13 von der Empfangseinrichtung 1 zu dem Speicherort 6 übertragen und dort in den persönlichen Kalender 7 eingetragen wurde. Der Eintrag 8 weist auf, die Anfangszeit 10, die Endzeit 11 sowie eine Information 12 zum Inhalt der Sendung. In der darunter folgenden Darstellungen des Eintrages 8 ist zunächst gezeigt, dass es sich um einen "TV-Eintrag" handelt. In Übereinstimmung mit dem Eintrag 8 auf der Empfangseinrichtung 1 ist nach dem gezeigten Beispiel dem Eintrag 8 entnehmbar, dass dieser auf dem Programm MDR gezeigt wird, dass dieser um 18:48 Uhr beginnt und um 18:50 Uhr endet und dass es sich bei der Sendung um "Sachsenspiegel kompakt" handelt.

Es kann in dem persönlichen Kalender 7 der Eintrag 8 so vorgenommen werden, dass die derzeit in solchen Kalender integrierten Funktionen wie beispielsweise Erinnerungen, Einladungen (zu Terminen) und Terminserien genutzt werden.

Es kann beim Vornehmen von Einträgen in dem persönlichen Kalender 7 zu einer Datenübertragung in die Richtung der Empfangseinrichtung 1 kommen, was durch ein Datenübertragungsprotokoll vorgegeben ist (Quittung u.ä.).

Die Peripherie 4 weist Mittel zur Datenübertragung sowie Mittel zur Datenspeicherung auf. Derartiges ist bei einem LAN (engl. "local area network") und bei einem WAN (engl. "wide area network") üblicherweise vorzufinden. Die Mittel zur Datenübertragung können elektrische Leitungen oder drahtlose Verbindungstrecken sein (z.B. Ethernet, WLAN/WiFi). Folglich kann eine Empfangseinrichtung 1 einen Ethernet-Anschluss oder eine WLAN-Komponente enthalten, wobei solche Mittel auch nachrüstbar oder ansteckbar sind (WLAN-Stick). Eine Peripherie 4 kann aus mehreren Netzwerken gebildet sein.

Die Mittel zur Datenspeicherung sind üblicherweise als Speichergeräte mit z.T. mehreren Festplatten ausgeführt (NAS engl. "network area storage"). Derartige Speichergeräte arbeiten in einem Netzwerk autark und sind über das Netzwerk zum Speichern von unterschiedlichen Daten 5 (Lesen/Schreiben) erreichbar. Speichergeräte sind über mindestens eine Netzwerkadresse im Netzwerk erreichbar. Üblicherweise sind auf dem Speichergerät Strukturen (z.B. Verzeichnisse) angelegt, um einen Speicherort 6 eindeutig adressieren zu können. Das heißt, dass eine eindeutige Adresse aus mehreren technischen Adressen (IP-Adresse und Verzeichnis) gebildet sein, aus einem Bezeichner oder kann aus einem Konstrukt aus Bezeichnern bestehen (z.B. URL engl. "uniform resource locator"; URI engl. "uniform resource identifier").

Es kann ferner vorgesehen sein, dass auf dem elektronischen Gerät 15 eine Anwendung (Programm, Software, App) bereitgestellt ist, um eine elektronische Programmzeitschrift 9 (EPG) zusammenzustellen, anzuzeigen usw. Eine derartige Anwendung stellt eine Empfangseinrichtung 1 im Sinne dieser Erfindung dar, denn die elektronische Programmzeitschrift 9 ist ein Teil der linearen Medieninhalte. Die aufgezeigte Lösung eignet sich auch für eine (definitionsgemäße) Empfangseinrichtung 1, die auf/in einem Computer eingerichtet ist (Software + Hardware (TV-Empfänger/Tuner)).

### Bezugszeichenliste

- 1: Empfangseinrichtung
- 2: Sender
- 3: lineare Medieninhalte
- 4: Peripherie
- 5: Daten
- 6: Speicherort
- 7: persönlicher Kalender
- 8: Eintrag
- 9: elektronische Programmzeitschrift (EPG)
- 10: Anfang
- 11: Ende
- 12: Information (zum Inhalt)
- 13: erste Markierung
- 14: zweite Markierung
- 15: elektronisches Gerät

## Patentansprüche

1. Anordnung aufweisend,
eine Empfangseinrichtung (1) zum Empfangen von linearen Medieninhalten (3) sowie
eine Peripherie (4) zum Übertragen und Speichern von Daten (5),
wobei die Empfangseinrichtung (1) mit der Peripherie (4) gekoppelt ist,
wobei in der Peripherie (4) ein Speicherort (6) bereitgestellt ist zum Speichern von Daten (5),
wobei in dem Speicherort (6) Daten (5) eines persönlichen Kalenders (7) gespeichert sind und die Daten (5) Einträge in dem persönlichen Kalender (7) sind, wobei die Empfangseinrichtung (1) eingerichtet ist, mindestens einen Eintrag (8) in dem persönlichen Kalender (7) vorzunehmen, nämlich anzulegen, zu löschen und/oder zu ändern.

2. Anordnung gemäß Anspruch 1,
wobei die Empfangseinrichtung (1) Daten aufweist, die an eine Zeit, nämlich Datum und/oder Uhrzeit, gebunden sind, und eingerichtet ist, Einträge eines Kalenders der Empfangseinrichtung (1) bereitzustellen.

3. Anordnung gemäß Anspruch 1 oder 2,
wobei die Einträge des Kalenders der Empfangseinrichtung (1), Inhalte einer elektronischen Programmzeitschrift (9) und/oder von einem Bediener der Empfangseinrichtung (1) erfasste zeitliche Ereignisse sind.

4. Anordnung gemäß einem der Ansprüche 1 bis 3,
der Eintrag (8) in dem Kalender der Empfangseinrichtung (1) aufweisend,
eine erste Zeit für den zeitlichen Anfang (10) und optional eine zweite Zeit für das zeitliche Ende (11) des Eintrages (8),
eine Information (12) zu dem Inhalt des Eintrages (8) sowie
eine erste Markierung (13), die zum Erfassen dafür bereitgestellt ist, dass der Eintrag (8) in dem persönlichen Kalender (7) vorzunehmen ist.

5. Anordnung gemäß einem der Ansprüche 1 bis 4,
der Eintrag (8) in dem Kalender der Empfangseinrichtung (1) ferner aufweisend, eine zweite Markierung (14), die zum Vormerken dafür bereitgestellt ist, dass der Eintrag (8) für den Bediener von besonderem Interesse ist.

6. Anordnung gemäß einem der Ansprüche 1 bis 5,
wobei die Anordnung mindestens ein elektronisches Gerätes (15) aufwiest,
wobei das elektronische Gerät (15) mit der Peripherie (4) gekoppelt ist,
wobei das elektronische Gerät (15) eingerichtet ist, den persönlichen Kalender (7) zu verarbeiten, nämlich mindestens einen Eintrag (8) vorzunehmen und/oder zu lesen,
wobei das Vornehmen eines Eintrages (8) in dem persönlichen Kalenders (7) derart eingerichtet ist, dass die Daten (5) in dem Speicherort (6) geändert werden.

7. Anordnung gemäß Anspruch 6,
wobei das Vornehmen eines Eintrages (8) in dem persönlichen Kalenders (7) derart eingerichtet ist, dass in der Empfangseinrichtung (1) die Daten des Eintrages (8) des Kalenders der Empfangseinrichtung (1) geändert werden, zu dem ein adäquater Eintrag (8) in dem persönlichen Kalender (7) vorhanden ist.

8. Anordnung gemäß einem der Ansprüche 1 bis 7,
wobei das elektronische Gerät (15) den Speicherort (6) in der Peripherie (4) bereitstellt.

9. Empfangseinrichtung (1) der Anordnung gemäß einem der Ansprüche 1 bis 8.

10. Verwendung einer Empfangseinrichtung (1) gemäß Anspruch 9 in einer Anordnung gemäß einem der Ansprüche 1 bis 8.
